# EUROPEAN PATENT SPECIFICATION

(11) **EP 4 299 199 B1**
(45) Date of publication and mention of the grant of the patent: **23.04.2025**
(21) Application number: 22807193.2
(22) Date of filing: 22.03.2022
(51) Int. Cl.: B07B 4/08, C04B 28/14, B03B 9/06, C04B 11/26, B09B 5/00, B03B 5/46, C04B 111/00

(54) **A GYPSUM-BASED BUILDING BOARD MANUFACTURING APPARATUS COMPRISING A FOREIGN MATTER REMOVING APPARATUS**
VORRICHTUNG ZUR HERSTELLUNG VON BAUPLATTEN AUF GIPSBASIS UMFASSEND EINE VORRICHTUNG ZUR ENTFERNUNG VON FREMDSTOFFEN
DISPOSITIF DE PRODUCTION DE PLANCHES DE CONSTRUCTION À BASE DE GYPSE, COMPRENANT UN DISPOSITIF D'ÉLIMINATION DE MATIÈRES ÉTRANGERS

(30) Priority: 13.05.2021 JP 2021081546
(43) Date of publication of application: 03.01.2024
(73) Proprietor: Yoshino Gypsum Co., Ltd., Tokyo 100-0005 (JP)
(72) Inventor: TANI, Hirokuni, Tokyo 100-0005 (JP)
(74) Representative: Ter Meer Steinmeister & Partner
(86) International application number: PCT/JP2022/013255
(87) International publication number: WO 2022/239488

(56) References cited:
- EP-A1- 3 287 197
- EP-A1- 3 308 875
- WO-A1-2016/171176
- CN-A- 101 670 612
- JP-A- 2006 150 288
- JP-A- 2006 212 614
- JP-A- H09 276 800
- JP-A- H09 276 800
- JP-A- H1 085 714
- JP-A- S62 110 787
- JP-A- S62 110 787

## Description

### [Technical Field]

The present invention relates to a gypsum-based building board manufacturing apparatus comprising a foreign matter removing apparatus.

### [Background Art]

PTL 1 discloses a gypsum board sorting and processing apparatus including: a crushing means (pulverizing means) that roughly crushes (roughly pulverizes) gypsum board; a primary sorting means that separates the roughly crushed (roughly pulverized) gypsum board into gypsum components and crushed pieces (pulverized pieces) mixed with both the gypsum components and the paper components; an impact crusher that further finely pulverizes the crushed pieces (pulverized pieces) mixed with both the gypsum components and the paper components obtained by the primary sorting means; a secondary sorting means that separates a pulverized product pulverized by the impact crusher into gypsum components, paper components, and a pulverized product mixed with both the gypsum components and the paper components; and a wind-powered sorter that separates the pulverized product mixed with both the gypsum components and the paper components obtained in the secondary sorting process into gypsum components and paper components.

PTL 1 further discloses providing a metal foreign matter removing means consisting of a magnetic pulley provided at least one end of an endless belt.

PTL 2 relates to a method comprising a step of measuring a water content and a magnetized matter content of molding sand discharged from green sand casting equipment; a step of comparing the measured water content with a first control value; a step of comparing the measured magnetized matter content with a second control value; thereafter, a step of reclaiming the molding sand by dry mechanical reclamation; and a step of classifying the molding sand.

PTL 3 relates to a system for granulating waste gypsum continuously comprises the following equipment installed in the order from the head of the system: (a) a crusher; (b) a rotary screen and a drying burner; (c) a sprayer; (d) a dryer 7; (e) a crushing/screening machine; and (f) a bagger for bagging the obtained waste gypsum particles having specific particle size.

PTL 4 relates to a fluidized-bed classification method including the steps of: supplying a mixture into a coarse classification section partitioned by a partition wall from a fine classification section; removing a foreign matter having a relatively large size and a foreign matter having a large specific gravity in the coarse classification section while supplying fluidizing air to the coarse classification section; introducing the mixture from which the foreign matter has been removed into the fine classification section by mainly passing the mixture over the partition wall; and further removing the foreign matter in the fine classification section while supplying fluidizing air to the fine classification section.

PTL 5 relates to a distribution plate provided with such inclinations that the center is low as compared with the perimetry. At a lowest position, a coarse particle discharge chute is installed. An air chamber is divided into a first and a second air chambers by a partition plate. Raw material is thrown into a first fluidized bed chamber above the first air chamber from a raw material throw-in port and is fluidized by air fed from a first air feeder including coarse particles. Above the second air chamber, the fluidization of coarse particles is restrained by air fed from a second air feeder to form a fluidized bed, and fine particles with which coarse particles are not mixed are discharged from a fine particle discharge chute.

PTL 6 relates to a method and apparatus for classifying fine powders and granules such as fine ceramics, new metal materials, medicines and toner. PTL 7 relates to a fiber cement board or fiber gypsum board production process and a production line with equipment structure and production process.

### [Citation List]

### [Patent Literature]

[PTL 1] Japanese Laid-Open Patent Publication No. 2004-313896
[PTL 2] EP 3 308 875 A1
[PTL 3] JP 2006 212614 A
[PTL 4] EP 3 287 197 A1
[PTL 5] J H09 276800 A
[PTL 6] JP S62 110787 A
[PTL 7] CN 101 670 612 A

### [Summary of Invention]

### [Technical Problem]

A foreign matter removing apparatus has conventionally been studied for the purpose of removing foreign matter in raw materials or resources collected for the purpose of recycling or reuse.

As described above, PTL 1 discloses a sorting and processing apparatus including a wind-powered sorter and a metal foreign matter removing means consisting of a magnetic pulley. However, according to the sorting and processing apparatus disclosed in PTL 1, only very light foreign matter such as paper and foreign matter with magnetism can be removed. For this reason, in the gypsum board sorting and processing apparatus disclosed in PTL 1, non-magnetic non-ferrous metals and foreign matter with high specific gravity such as pebbles could not be removed except for the foreign matter with magnetism.

In view of the problems of the above conventional technology, one aspect of the present invention aims to provide an improved gypsum based building board manufacturing apparatus comprising a foreign matter removing apparatus capable of removing foreign matter with high specific gravity.

### [Solution to Problem]

In order to solve the above problem, according to one aspect of the present invention, a gypsum-based building board manufacturing apparatus as defined in claim 1 is provided. The foreign matter removing apparatus includes: a conveyance device configured to convey the powder and granular material from a supply port to a discharge port that are for the powder and granular material; and a foreign matter sedimentation device that is provided between the supply port and the discharge port on a conveyance path of the conveyance device, and is configured to sediment the foreign matter in the powder and granular material. The foreign matter sedimentation device includes both a foreign matter discharge port provided at a lowest position in a height direction and a bottom inclined toward the foreign matter discharge port.

### [Advantageous Effects of Invention]

According to one embodiment of the present invention, it is possible to provide a foreign matter removing apparatus capable of removing foreign matter with high specific gravity.

### [Brief Description of Drawings]

[FIG. 1] FIG. 1 is an explanatory diagram of a foreign matter removing apparatus according to an embodiment of the present disclosure.
[FIG. 2] FIG. 2 is an explanatory diagram of a modification example of a foreign matter removing apparatus according to an embodiment of the present disclosure.

### [Description of Embodiments]

In the following, embodiments of the present invention will be described with reference to the drawings. However, the present invention is not limited to the following embodiments, and various modifications and substitutions can be added thereto without departing from the scope of the present invention as defined by the claims.

### [Foreign Matter Removing Apparatus]

One exemplary configuration of the foreign matter removing apparatus according to the present embodiment will be described.

The foreign matter removing apparatus according to the present embodiment is a foreign matter removing apparatus for removing foreign matter in a powder and granular material, and includes a conveyance device and a foreign matter sedimentation device described below.

The conveyance device can convey the powder and granular material from a supply port to a discharge port.

The foreign matter sedimentation device is provided between the supply port and the discharge port on a conveyance path of the conveyance device, and can sediment foreign matter in the powder and granular material. The foreign matter sedimentation device can include a foreign matter discharge port provided at the lowest position in the height direction and a bottom inclined toward the foreign matter discharge port.

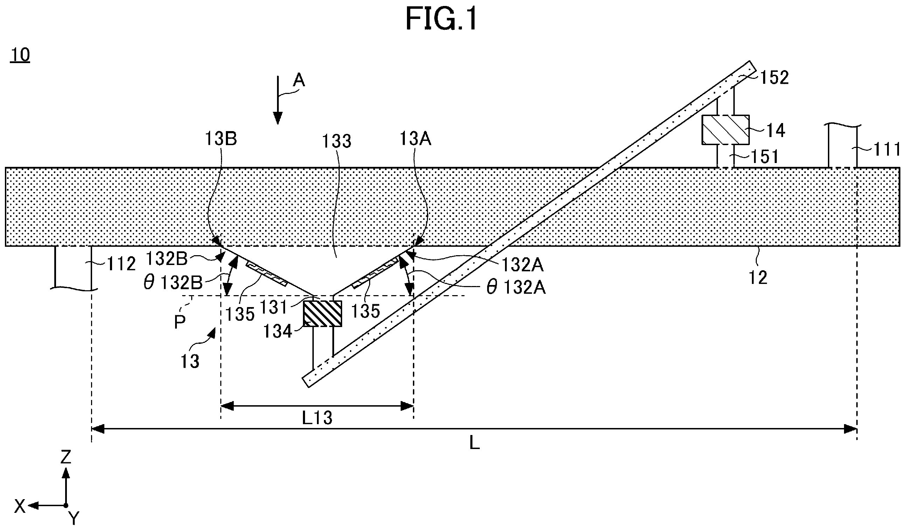

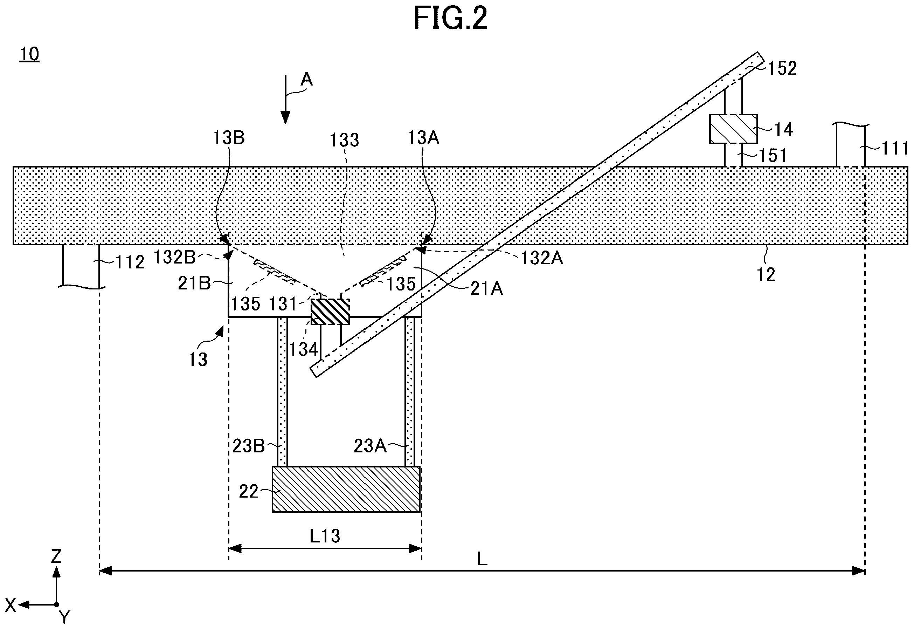

An exemplary configuration of the foreign matter removing apparatus according to the present embodiment will be described with reference to FIGS. 1 and 2. FIG. 1 is a side view of a foreign matter removing apparatus 10 according to the present embodiment, passing through a foreign matter discharge port 131 of a foreign matter sedimentation device 13, and along a conveyance path of the powder and granular material. FIG. 2 is an explanatory diagram of a modification example of the foreign matter removing apparatus according to the present embodiment, and is an explanatory diagram of when an air box and the like is provided as described later. Therefore, FIG. 2 will be used when necessary, and description will be made mainly using FIG. 1.

In FIGS. 1 and 2, optional components that the foreign matter removing apparatus according to the present embodiment may include are also illustrated. The foreign matter removing apparatus according to the present embodiment is not limited to such a configuration. In FIGS. 1 and 2, the powder and granular material to be processed is not illustrated.

In FIGS. 1 and 2, the X-axis direction is the direction in which a conveyance device 12 conveys the powder and granular material, the Y-axis direction is the width direction of the conveyance device 12, and the Z-axis direction is the height direction.

The components included in the foreign matter removing apparatus according to the present embodiment will be described below.

### (1) Conveyance Device

The foreign matter removing apparatus 10 according to the present embodiment can include the conveyance device 12 that conveys the powder and granular material from a supply port 111 to a discharge port 112.

The powder and granular material to be processed by the foreign matter removing apparatus 10 according to the present embodiment may include one or more kinds selected from a powder consisting of fine particles and a powder and granular material consisting of particles with a particle size larger than the powder. That is, an aggregate of particles can be used as the powder and granular materials without being limited by the particle size, particle size distribution, shape, and the like of the constituting particles. Therefore, the powder and granular material may also contain, for example, a pulverized product of various building materials such as gypsum board, particles of large particle size such as ores, and particles of small particle size that is a pulverized product of ores and the like, and mixtures of these materials.

According to the foreign matter removing apparatus according to the present embodiment, foreign matter with high specific gravity can be removed. For example, foreign matter with relatively high specific gravity, such as various metals and pebbles, can be removed among the materials that constitutes the powder and granular material to be processed. The foreign matter to be removed may or may not be magnetic. According to the foreign matter removing apparatus according to the present embodiment, non-magnetic foreign matter, such as non-ferrous metals, for example, can also be removed. The non-magnetic foreign matter means foreign matter with weak or no magnetic attraction, such as non-ferrous metals and pebbles.

The foreign matter removing apparatus according to the present embodiment can be applied to any powder and granular material from which foreign material with high specific gravity is required to be removed. The term "capable of removing foreign matter with high specific gravity" does not only mean that the foreign matter is completely removed, but also includes the case where a part of the foreign matter with relatively high specific gravity contained in the powder and granular material is removed and its content is reduced.

The types of the powder and granular material are not particularly limited. Gypsum is a natural resource, and in recent years, it is often used as a gypsum board or the like and then recovered and reused. In the case of either natural resource gypsum or recycled gypsum, foreign matter with high specific gravity is often contained, and it has been desired to remove such foreign matter with high specific gravity. Therefore, it is preferable that the powder and granular material contains gypsum, and it is more preferable that the powder and granular material is gypsum. When the powder and granular material contains gypsum, the type of the gypsum is not particularly limited, but one or more types selected from, for example, dihydrate gypsum, calcined gypsum (hemihydrate gypsum), and anhydrous gypsum may be used. It is often desired to reduce or remove the foreign matter from calcined gypsum because calcined gypsum is used as a raw material for gypsum boards and the like and has better fluidity than dihydrate gypsum or anhydrous gypsum. Therefore, when the powder and granular material contains gypsum, the gypsum preferably contains calcined gypsum. Calcined gypsum is also called calcium sulfate hemihydrate, and is an inorganic compound with hydraulic properties.

The conveyance device 12 may be any device that, when passing through the foreign matter sedimentation device 13 described later, temporarily supplies the powder and granular material, which is conveyed, into the foreign matter sedimentation device 13, collects the powder and granular material after the sedimentation process in the vicinity of the upper end of the foreign matter sedimentation device 13, conveys the material, and discharges the material to the discharge port 112. Therefore, as the conveyance device 12, a chain conveyor or a screw conveyor may be used, for example.

In FIG. 1, a casing of the conveyance device 12 is illustrated, and a specific conveyance means is not illustrated.

FIG. 1 illustrates an example in which the conveyance device 12 is arranged horizontally, that is, in parallel with the X-axis, but it is not limited to such a configuration, and it may be inclined. That is, an angle may be formed with a horizontal plane P illustrated in FIG. 1. The angle with the horizontal plane P is preferably less than 90 degrees, and more preferably 60 degrees or less. The horizontal plane P is a plane parallel to the X-axis in FIG. 1.

The conveyance device 12 is preferably arranged so that the powder and granular material containing the foreign matter pass through a separation tank 133 of the foreign matter sedimentation device 13, especially through the upper end of the separation tank 133.

The conveyance device 12 may be arranged so that the powder and granular material pass through the separation tank 133 as described above. Accordingly, when the powder and granular material containing the foreign matter, which is conveyed by the conveyance device 12, passes above the foreign matter sedimentation device 13, the powder and granular material temporarily falls into the separation tank 133 in the vicinity of an inlet 13A of the foreign matter sedimentation device 13, and is supplied to the separation tank 133. At this time, the foreign matter is collected in the vicinity of the foreign matter discharge port 131 due to its higher specific gravity than that of the powder and granular material and the inclined bottom of the separation tank 133. Therefore, the powder and granular material with reduced foreign matter content is placed above the separation tank 133, especially in the vicinity of an outlet 13B.

The conveyance device 12 conveys the powder and granular material containing the foreign matter and causes the powder and granular material to temporarily fall into the separation tank 133 of the foreign matter sedimentation device 13. The conveyance device 12 then collects the powder and granular material in the vicinity of the outlet 13B of the foreign matter sedimentation device 13 and conveys it to the discharge port 112. The conveyance device 12 can collect and convey the powder and granular material with reduced foreign matter content after the sedimentation process because the powder and granular material with reduced foreign matter content by the sedimentation process is placed in the vicinity of the outlet 13B of the separation tank 133 as described above.

### (2) Foreign Matter Sedimentation Device

The foreign matter removing apparatus 10 according to the present embodiment can include the foreign matter sedimentation device 13. The foreign matter sedimentation device 13 can be provided between the supply port 111 and the discharge port 112 on the conveyance path of the conveyance device 12.

### (2-1) Configuration of Foreign Matter Sedimentation Device

### (2-1-1) Foreign Matter Discharge Port and Bottom

The foreign matter sedimentation device 13 can include the foreign matter discharge port 131 provided at the lowest position in the height direction. The foreign matter sedimentation device 13 can include bottoms 132A and 132B inclined toward the foreign matter discharge port 131. The height direction is the Z-axis direction in FIG. 1.

As illustrated in FIG. 1, the foreign matter discharge port 131 can be provided to be the lowest part in the foreign matter sedimentation device 13 and can include the bottoms 132A and 132B inclined toward the foreign matter discharge port 131. The space surrounded by the foreign matter discharge port 131 and the bottoms 132A and 132B is the separation tank 133 for sedimenting the foreign matter in the powder and granular material.

The shape of the separation tank 133 is not particularly limited, but as illustrated in FIG. 1, for example, the cross-sectional shape along the height direction can have a funnel shape, due to the trapezoidal portion surrounded by the bottoms 132A and 132B and the square portion of the piping of the foreign matter discharge port 131. The separation tank 133 may also include additional sidewalls along the Z-axis above the bottoms 132A and 132B to increase the volume in the separation tank 133 sufficiently. When the sidewalls are provided, it is preferable that they have a shape and size that do not interfere with the conveyance of the powder and granular material by the conveyance device 12.

The shape of the separation tank 133 when viewed from the top, that is, the shape of the top when viewed along an arrow A in FIG. 1, is not particularly limited, but may be, for example, a polygonal shape such as a square, or a circular shape such as a circle or an ellipse.

The inclination angles of the bottoms 132A and 132B, for example, the angles θ132A and θ132B formed between the bottoms and the horizontal plane P passing through the foreign matter discharge port 131 illustrated in the figure, are not particularly limited, but are preferably 5 degrees or more and less than 90 degrees, for example, and more preferably 7 degrees or more and 60 degrees or less. By setting the inclination angles of the bottoms 132A and 132B to 5 degrees or more and less than 90 degrees, the fluidity of the powder and granular material in the separation tank 133 can be enhanced.

The angle θ132A, which is the inclination angle of the bottom 132A, and the angle θ132B, which is the inclination angle of the bottom 132B, may be the same or different. In FIG. 1, the bottoms 132A and 132B are illustrated as surfaces with uniform inclination angles as an example, but it is not limited to this configuration. The inclination angle may change on the way to the foreign matter discharge port 131. That is, the bottoms 132A and 132B may be formed of a plurality of surfaces with different inclination angles.

The foreign matter discharge port 131 can be provided at the lowest position in the height direction as described above. By providing the foreign matter discharge port 131 at the lowest position in the height direction and fluidizing the powder and granular material in the separation tank 133, the foreign matter with high specific gravity is separated due to the difference in specific gravity, gathers in the foreign matter discharge port 131, and can be separated from the powder and granular material. The foreign matter discharge port 131 is sufficient as long as it is an opening for discharging the separated foreign matter, but it can also be configured as an area with a certain thickness, for example, a cylindrical pipe or the like, so that the separated foreign matter can be stored.

The position of the foreign matter discharge port 131 in the foreign matter sedimentation device 13 in the horizontal direction is not particularly limited, but it can be provided, for example, between one end of the foreign matter sedimentation device 13, the inlet 13A, and the other end, the outlet 13B, along the conveyance path of the powder and granular material. The foreign matter discharge port 131 is preferably provided so as to extend over a central position between the inlet 13A and the outlet 13B, especially.

The powder and granular material containing the foreign matter is continuously supplied to the foreign matter sedimentation device 13 by the conveyance device 12. In the foreign matter sedimentation device 13, the bottoms 132A and 132B are inclined as described above. Therefore, the powder and granular material containing the foreign matter supplied to the foreign matter sedimentation device 13 fluidizes in the separation tank 133 of the foreign matter sedimentation device 13, and the foreign matter with high specific gravity different from that of the powder and granular material settles down into the foreign matter discharge port 131, thereby enabling separation of the powder and granular material and the foreign matter. In the foreign matter removing apparatus 10 according to the present embodiment, the foreign matter and the powder and granular material are separated by the difference in specific gravity, so even when the foreign matter is non-magnetic, it can be separated and removed.

The foreign matter sedimentation device 13 may also include a foreign matter discharge device or a fluidity imparting device, as needed, as described below.

### (2-1-2) Foreign Matter Discharge Device

The foreign matter discharge port 131 of the foreign matter sedimentation device 13 is formed as an opening so that the separated foreign matter can be discharged to the outside of the foreign matter sedimentation device 13, and the foreign matter can be removed from the powder and granular material. Because part of the powder and granular material is also discharged from the foreign matter discharge port 131 together with the foreign matter, it is preferable to operate the foreign matter sedimentation device 13 for a certain period of time, and to discharge the foreign matter from the foreign matter discharge port 131 at the timing when the foreign matter gathers in the vicinity of the foreign matter discharge port 131.

Therefore, it is preferable that the foreign matter sedimentation device 13 includes a foreign matter discharge device 134 for discharging the foreign matter. The foreign matter discharge device 134 can be provided at the foreign matter discharge port 131.

The specific configuration of the foreign matter discharge device 134 is not particularly limited as long as it is a device that can discharge the foreign matter from the foreign matter sedimentation device 13 at the timing of discharging the foreign matter. As the foreign matter discharge device 134, an opening/closing valve that opens/closes the foreign matter discharge port 131 or a device that can forcibly discharge the foreign matter gathered in the vicinity of the foreign matter discharge port 131, can be used. As the foreign matter discharge device 134, for example, one or more devices selected from dampers, rotary feeders, screw conveyors, rotary valves, or the like, can be used. The foreign matter discharge device 134 is provided at the foreign matter discharge port 131 as described above, and can constitute a part of the foreign matter discharge port 131.

As described above, it is preferable to discharge the foreign matter from the foreign matter discharge port 131 at the timing when the foreign matter gathers in the vicinity of the foreign matter discharge port 131. Therefore, it is preferable that the foreign matter discharge device 134 is operated intermittently. For example, an operator may operate the device at any given timing, or a control device (not illustrated) may be connected to the foreign matter discharge device 134 to operate at a predetermined or any given timing by the control device.

### (2-1-3) Fluidity Imparting Device

As described above, the foreign matter sedimentation device 13 includes the bottoms 132A and 132B that are inclined, so that the powder and granular material containing the foreign matter supplied to the foreign matter sedimentation device 13 fluidizes. In order to enhance the fluidity of the supplied powder and granular material, the foreign matter sedimentation device 13 may also include a fluidity imparting device 135 for fluidizing the powder and granular material supplied into the foreign matter sedimentation device 13.

The fluidity imparting device 135 is not particularly limited as long as it is a device capable of imparting fluidity to the powder and granular material supplied to the separation tank 133, but one or more devices selected from an air slider, vibrator, and the like, can be used suitably.

The air slider is a device for blowing a gas such as air into the separation tank 133 to give fluidity to the powder and granular material. The vibrator is a device for giving vibration to the powder and granular material in the separation tank 133.

When the air slider is used as the fluidity imparting device, it is preferable to provide the bottoms 132A and 132B with a gas permeating part such as a fabric, a ceramic, or a metal porous body that allows gas such as air to pass through without the powder and granular material flowing out to the outside. It is preferable that a gas such as air is supplied through the gas permeating part by one or more gas supply devices selected from a blower, a fan, a compressor, and the like. In order to efficiently supply gas to the bottoms 132A and 132B, for example, as illustrated in FIG. 2, the outer surfaces of the bottoms 132A and 132B may be covered with an iron plate or the like, and air boxes 21A and 21B, which are spaces formed with the bottoms 132A and 132B, may be provided. A gas supply device 22 may be connected to the air boxes 21A and 21B via pipes 23A and 23B. It is preferable to supply gas from the gas supply device 22 into the air boxes 21A and 21B via the pipes 23A and 23B, which enables pressure to be applied uniformly to the bottoms 132A and 132B.

The fluidity imparting device 135 may be provided at any location and its form is not limited, but it is preferable to provide the fluidity imparting device 135 on the bottoms 132A and 132B, as in the example illustrated in FIG. 1. When the fluidity imparting device 135 is used, an air slider and a vibrator may be used together.

### (2-2) Arrangement of Foreign Matter Sedimentation Device

As described above, the foreign matter sedimentation device 13 may be provided on the conveyance path of the conveyance device 12 between the supply port 111 and the discharge port 112, that is, in the area of a length L of the conveyance path illustrated in FIG. 1. It is preferable that the foreign matter sedimentation device 13 is not provided in the immediate vicinity of the discharge port 112, and that it is provided in the area on the conveyance path that does not overlap the area for discharging the powder and granular material to the discharge port 112.

The foreign matter sedimentation device 13 may be provided to include the area that overlaps the area for supplying the powder and granular material from the supply port 111, provided that it has a sufficient length to sediment and remove the foreign matter.

By providing the foreign matter sedimentation device 13 in the area described above, the degree of freedom of where the foreign matter sedimentation device 13 is installed and the size of the foreign matter sedimentation device 13 is increased. Therefore, for example, the size of the foreign matter sedimentation device 13 may be selected according to the degree of removal of the foreign matter required. The longer the length L13 of the foreign matter sedimentation device 13 along the conveyance direction of the powder and granular material, the more the powder and granular material fluidizes properly in the foreign matter sedimentation device 13 and the higher the removing efficiency of the foreign matter, although this depends on the conveyance amount and the conveyance speed of the powder and granular material.

For example, the length L13 of the foreign matter sedimentation device 13 is preferably shorter than the length L of the conveyance path of the conveyance device 12 and 1.5 times or more and 10 times or less the width of the conveyance path of the conveyance device 12, and more preferably 3 times or more and 7 times or less the width of the conveyance path of the conveyance device 12. The width of the conveyance path of the conveyance device 12 means the width of the conveyance path in the direction perpendicular to the plane of FIG. 1, that is, in the Y-axis direction. For example, it can be the width of the area enclosed by the casing of the conveyance device.

A plurality, that is, two or more of the foreign matter sedimentation devices 13 may be provided on the conveyance path. When a plurality of the foreign matter sedimentation devices 13 are provided on the conveyance path, the total length of the length L13 of each foreign matter sedimentation device can be shorter than the length L of the conveyance path of the conveyance device 12. It is preferable that each foreign matter sedimentation device is not provided in the immediate vicinity of the discharge port 112, and that it is provided in the area on the conveyance path that does not overlap the area for discharging the powder and granular material to the discharge port 112.

### (3) Foreign Matter Separation Device and Circulation Device

As described above, part of the powder and granular material is also discharged from the foreign matter discharge port 131 together with the separated foreign matter. By further removing the foreign matter from the powder and granular material and collecting the powder and granular material, it is possible to reduce the amount of the powder and granular material disposed together with the foreign matter.

For this reason, the foreign matter removing apparatus 10 according to the present embodiment may further include a foreign matter separation device 14 for separating the foreign matter from the powder and granular material that is discharged from the foreign matter discharge port 131 and contains the foreign matter.

The foreign matter separation device 14 may be any device that can separate the foreign matter from the powder and granular material that is discharged from the foreign matter discharge port 131 and contains the foreign matter. For example, one or more devices selected from a sieve such as a vibrating sieve, a rotary sorter also called a trommel, or the like may be used. In FIG. 1, an example using one foreign matter separation device 14 is illustrated, but a plurality of foreign matter separation devices 14 may also be provided in series along the conveyance direction of the powder and granular material.

When the foreign matter separation device 14 is separated from the foreign matter discharge port 131, the foreign matter removing apparatus 10 may also include a foreign matter separation conveyance device 152 to convey the powder and granular material containing the discharged foreign matter from the foreign matter discharge port 131 to the foreign matter separation device 14 as illustrated in FIG. 1, for example. The foreign matter separation conveyance device 152 may be any device that can convey the powder and granular material. The foreign matter separation conveyance device 152 may be one or more devices selected from devices that can convey the powder and granular material, such as screw conveyors, chain conveyors, belt conveyors, and the like, for example.

The powder and granular material after the foreign matter being separated by the foreign matter separation device 14 and being collected may be returned to the hopper or the like of the raw material, or may be returned to the conveyance path of the powder and granular material. In this case, the foreign matter removing apparatus 10 according to the present embodiment may also include a circulation device 151 that returns the powder and granular material from which the foreign matter is separated by the foreign matter separation device 14 back onto the conveyance path of the conveyance device 12, as illustrated in FIG. 1, for example.

The circulation device 151 may be any device that can convey the powder and granular material between the foreign matter separation device 14 and the conveyance device 12. For example, when the foreign matter separation device 14 is provided above the conveyance device 12 as illustrated in FIG. 1, the circulation device 151 may be a simple pipe because the powder and granular material can be returned to the conveyance path by free fall. When the foreign matter separation device 14 is separated from the conveyance device 12, the circulation device 151 may be one or more devices selected from devices that can convey the powder and granular material, such as screw conveyors, chain conveyors, belt conveyors, and the like.

According to the foreign matter removing apparatus according to the present embodiment described above, the non-magnetic foreign matter contained in the powder and granular material can be easily removed by providing the foreign matter sedimentation device described above on the conveyance path of the conveyance device.

### [Gypsum-Based Building Board Manufacturing Apparatus]

In the gypsum-based building board manufacturing apparatus according to the present invention, the foreign matter removing apparatus described above is provided on a conveyance path for a raw material that contains gypsum.

Specifically, for example, the foreign matter removing apparatus described above is provided on the conveyance path for the raw material containing gypsum, such as calcined gypsum. Accordingly, the foreign matter in the raw material can be reduced and removed.

The conveyance path of the raw material containing gypsum, such as calcined gypsum, includes at least one of the following: a conveyance path of raw gypsum (dihydrate gypsum) from a pulverizing device to a calcining device; a conveyance path of calcined gypsum from the calcining device to a storage silo or the like; a conveyance path of the calcined gypsum from the storage silo to the a weighing device; a subsequent conveyance path of the calcined gypsum from the weighing device to a slurry conditioning mixer; and the like, for example.

Other than the above points, the apparatus can be configured in the same manner as a common gypsum-based building board manufacturing apparatus, so the explanation is omitted here.

The type of the gypsum-based building board manufactured by the gypsum-based building board manufacturing apparatus according to the present invention is not particularly limited, but examples include a glass mat gypsum board, a gypsum-containing plate with glass fiber nonwoven fabric, a gypsum board specified in JIS A 6901(2014), a gypsum board that is lighter or heavier than the gypsum board specified in JIS A 6901(2014), a slag plasterboard, and the like. Hereinafter, gypsum boards specified in JIS described above and gypsum boards that are lighter or heavier than that specified in JIS are collectively called "gypsum board".

### [Foreign Matter Removing Method]

Next, an exemplary configuration of a foreign matter removing method will be described. The foreign matter removing method as described herein may be performed using the foreign matter removing apparatus described above. Therefore, the explanation of the matters already described will be omitted.

The foreign matter removing method as described herein is a method of removing the foreign matter in the powder and granular material, and may include a foreign matter removing process of removing the foreign matter in the powder and granular material by using the foreign matter removing apparatus described above.

Specifically, the foreign matter removing method as described herein is, for example, a foreign matter removing method of removing the foreign matter in the powder and granular material, and the foreign matter removing process may include, for example, a conveyance process and a foreign matter sedimentation process as described below.

In the conveyance process, the powder and granular material may be conveyed by the conveyance device from the supply port to the discharge port of the powder and granular material.

In the foreign matter sedimentation process, the foreign matter in the powder and granular material may settle down in the course of the conveyance process.

In the foreign matter sedimentation process, the foreign matter in the powder and granular material may be sedimented by using the foreign matter sedimentation device including the foreign matter discharge port provided at the lowest position in the height direction and the bottom inclined toward the foreign matter discharge port.

### (1) Conveyance Process

In the conveyance process, the conveyance device 12 may be used to convey the powder and granular material from the supply port 111 to the discharge port 112 of the powder and granular material. Because the conveyance device 12 has already been described, its description is omitted here.

The powder and granular material to be conveyed in the conveyance process has already been described. As described above, it is preferable that the powder and granular material contains gypsum, and it is more preferable that the powder and granular material is gypsum. When the powder and granular material contains gypsum, the gypsum preferably contains calcined gypsum.

### (2) Foreign Matter Sedimentation Process

The foreign matter sedimentation process may be performed in the course of the conveyance process, and the foreign matter in the powder and granular material may be sedimented by using the foreign matter sedimentation device.

As described using FIG. 1, the foreign matter sedimentation device 13 includes the foreign matter discharge port 131 and the bottoms 132A and 132B inclined toward the foreign matter discharge port 131. The space surrounded by the foreign matter discharge port 131 and the bottoms 132A and 132B is the separation tank 133 for sedimenting the foreign matter in the powder and granular material.

By performing the conveyance process, the powder and granular material containing the foreign matter is continuously supplied to the foreign matter sedimentation device 13. In the foreign matter sedimentation device 13, the bottoms 132A and 132B are inclined as described above. Therefore, in the foreign matter sedimentation process, the powder and granular material containing the foreign matter supplied to the foreign matter sedimentation device 13 fluidizes in the separation tank 133 of the foreign matter sedimentation device 13, and the foreign matter with high specific gravity settles down into the foreign matter discharge port 131, thereby enabling separation of the powder and granular material and the foreign matter.

### <Foreign Matter Discharge Device>

The foreign matter sedimentation device 13 may also include a foreign matter discharge device 134 for discharging the foreign matter. The foreign matter discharge device 134 can be provided at the foreign matter discharge port 131.

As described above, it is preferable to discharge the foreign matter from the foreign matter discharge port 131 at the timing when the foreign matter gathers in the vicinity of the foreign matter discharge port 131. Therefore, it is preferable that the foreign matter discharge device 134 is operated intermittently. For example, an operator may operate the device at any given timing, or a control device (not illustrated) may be connected to the foreign matter discharge device 134 to operate at a predetermined or any given timing by the control device.

### <Fluidity Imparting Device>

As described above, the foreign matter sedimentation device 13 includes the bottoms 132A and 132B that are inclined, so that the powder and granular material containing the foreign matter supplied to the foreign matter sedimentation device 13 fluidizes. In order to enhance the fluidity of the supplied powder and granular material, the foreign matter sedimentation device 13 may also include a fluidity imparting device 135 for fluidizing the powder and granular material supplied into the foreign matter sedimentation device 13.

Because the fluidity imparting device has already been described, its description is omitted here.

It is preferable that the fluidity imparting device is operated continuously during the foreign matter sedimentation process for imparting fluidity to the powder and granular material, but the fluidity imparting device may be operated intermittently at any time.

After the foreign matter sedimentation process, the powder and granular material in which the foreign matter is reduced and removed may be conveyed again by the conveyance device and discharged from the discharge port.

### (3) Foreign Matter Separation Process and Circulation Process

As described above, part of the powder and granular material is also discharged from the foreign matter discharge port 131 together with the separated foreign matter. By further removing the foreign matter from the powder and granular material and collecting the powder and granular material, it is possible to reduce the amount of the powder and granular material disposed together with the foreign matter.

For this reason, the foreign matter removing method as described herein may further include a foreign matter separation process for separating the foreign matter from the powder and granular material that is discharged from the foreign matter discharge port 131 and contains the foreign matter, by using the foreign matter separation device.

In the foreign matter separation process, the powder and granular material after the foreign matter being separated by the foreign matter separation device 14 and being collected may be returned to the hopper or the like of the raw material. The powder and granular material after the foreign matter being separated by the foreign matter separation device 14 may be returned to the conveyance path of the conveyance device 12, as illustrated in FIG. 1, for example.

That is, the foreign matter removing method as described herein may also include a circulation process in which the powder and granular material separated by the foreign matter separation device in the foreign matter separation process is returned to the conveyance path of the conveyance device by the circulation device. By performing the circulation process, the powder and granular material can be quickly returned to the conveyance path, and the speed of the foreign matter processing can be increased.

Because the foreign matter separation device and the circulation device have already been described, their description is omitted here.

According to the foreign matter removing method as described herein, the foreign matter contained in the powder and granular material with high specific gravity can be easily removed by performing the foreign matter sedimentation process in the course of the conveyance process.

### [Example]

Hereinafter, specific examples are given, but the present invention is not limited to these examples.

### [Example 1]

The foreign matter removing apparatus 10 illustrated in FIG. 1 was used to remove the foreign matter with high specific gravity contained in calcined gypsum.

As illustrated in FIG. 1, the foreign matter removing apparatus 10 includes the conveyance device 12 and the foreign matter sedimentation device 13.

The conveyance device 12 is configured to convey the calcined gypsum, which is the powder and granular material, from the supply port 111 to the discharge port 112 of the powder and granular material. As the conveyance device 12, a chain conveyor was used and arranged along the X-axis in FIG. 1, that is, horizontally.

The foreign matter sedimentation device 13 is provided between the supply port 111 and the discharge port 112 on the conveyance path of the conveyance device 12, and includes the foreign matter discharge port 131 provided at the lowest position in the height direction and the bottoms 132A and 132B inclined toward the foreign matter discharge port 131. The angles θ132A and θ132B, which are the inclined angles of the bottoms 132A and 132B, were both set to 10 degrees.

The length L13 of the foreign matter sedimentation device 13 was set to 1,250 mm, which is about 5 times the width of the conveyance device 12.

Furthermore, an air slider, which is the fluidity imparting device 135, was provided on the bottoms 132A and 132B of the foreign matter sedimentation device 13. Air was continuously supplied to the foreign matter sedimentation device while the powder and granular material was supplied, for imparting fluidity.

The air slider is provided with a gas permeating part, not illustrated, provided on the bottoms 132A and 132B of the foreign matter sedimentation device 13. The air boxes 21A and 21B illustrated in FIG. 2 are provided. The gas supply device 22 is connected to the air boxes 21A and 21B via the pipes 23A and 23B. Thus, the air supplied from the gas supply device 22 to the air boxes 21A and 21B is supplied into the separation tank 133 via the gas permeating part.

The foreign matter discharge port 131 is provided so as to extend over a central position between the inlet 13A, one end of the foreign matter sedimentation device 13, and the outlet 13B, the other end, along the conveyance path of the powder and granular material. A screw conveyor, which is the foreign matter discharge device 134, is provided at the foreign matter discharge port 131, for discharging the foreign matter from the foreign matter discharge port 131.

The powder and granular material that is discharged from the foreign matter discharge port 131 and contains the foreign matter was subjected to a vibrating sieve, which is the foreign matter separation device 14. The powder and granular material from which the foreign matter was removed were returned to the conveyance path by the circulation device 151.

As a result of the removal of the foreign matter with high specific gravity contained in the calcined gypsum using the foreign matter removing apparatus described above, the foreign matter remaining on the vibrating sieve was ferrous metals, non-ferrous metals, pebbles, and the like.

When approximately 500 tons of the calcined gypsum was conveyed using the chain conveyor of the conveyance device 12, the amount of the foreign matter remained on the vibrating sieve was approximately 500 kg, and most of the foreign matter with high specific gravity could be separated and removed.

As described above, the foreign matter removing apparatus, the gypsum-based building board manufacturing apparatus, and the foreign matter removing method have been described in terms of the embodiment, and the like, but the present invention is not limited to the above embodiment, and the like. Various modifications and changes are possible within the scope of the subject matter of the invention described in the claims.

### [Description of the Reference Numeral]

- 10: foreign matter removing apparatus
- 111: supply port
- 112: discharge port
- 12: conveyance device
- 13: foreign matter sedimentation device
- 131: foreign matter discharge port
- 132A,132B: bottom
- 134: foreign matter discharge device
- 135: fluidity imparting device
- 14: foreign matter separation device
- 151: circulation device

## Claims

1. A gypsum-based building board manufacturing apparatus **characterised in that** it comprises a foreign matter removing apparatus (10) for removing foreign matter in a powder and granular material, the foreign matter removing apparatus (10) comprising:
a conveyance device (12) configured to convey the powder and granular material from a supply port (111) to a discharge port (112) that are for the powder and granular material; and
a foreign matter sedimentation device (13) that is provided between the supply port (111) and the discharge port (112) on a conveyance path of the conveyance device (12), and is configured to sediment the foreign matter in the powder and granular material,
wherein the foreign matter sedimentation device (13) includes both a foreign matter discharge port (131) provided at a lowest position in a height direction and a bottom (132A, 132B) inclined toward the foreign matter discharge port (131), and
wherein the foreign matter removing apparatus (10) is provided on a conveyance path of a raw material that contains gypsum.

2. The gypsum-based building board manufacturing apparatus according to claim 1, wherein the foreign matter sedimentation device (13) includes a fluidity imparting device (135) configured to fluidize the powder and granular material supplied into the foreign matter sedimentation device.

3. The gypsum-based building board manufacturing apparatus according to claim 1 or 2,
wherein the foreign matter sedimentation device (13) includes a foreign matter discharge device (134) configured to discharge the foreign matter, and
wherein the foreign matter discharge device (134) is provided at the foreign matter discharge port (131).

4. The gypsum-based building board manufacturing apparatus according to claim 3, further comprising a foreign matter separation device (14) configured to separate the foreign matter from the powder and granular material that is discharged from the foreign matter discharge port (131) and contains the foreign matter.

5. The gypsum-based building board manufacturing apparatus according to claim 4, further comprising a circulation device (151) configured to return the powder and granular material from which the foreign matter is separated by the foreign matter separation device (14) back onto the conveyance path of the conveyance device (12).

6. The gypsum-based building board manufacturing apparatus according to any one of claims 1 to 5, wherein the powder and granular material contains gypsum.

7. The gypsum-based building board manufacturing apparatus according to claim 6, wherein the gypsum contains calcined gypsum.

## Patentansprüche

1. Vorrichtung zur Herstellung von Bauplatten auf Gipsbasis, **dadurch gekennzeichnet, dass** sie eine Vorrichtung zum Entfernen von Fremdstoffen (10) zum Entfernen von Fremdstoffen in einem Pulver- und Granulatmaterial umfasst, wobei die Vorrichtung zum Entfernen von Fremdstoffen (10) umfasst:
eine Fördervorrichtung (12), die so konfiguriert ist, dass sie das Pulver- und Granulatmaterial von einer Zufuhröffnung (111) zu einer Auslassöffnung (112) für das Pulver- und Granulatmaterial fördert; und
eine Fremdstoffsedimentationsvorrichtung (13), die zwischen der Zufuhröffnung (111) und der Auslassöffnung (112) auf einem Förderweg der Fördervorrichtung (12) vorgesehen ist und so konfiguriert ist, dass sie die Fremdstoffe in dem Pulver- und Granulatmaterial sedimentiert,
wobei die Fremdstoffsedimentationsvorrichtung (13) sowohl eine Fremdstoffauslassöffnung (131), die an einer niedrigsten Position in einer Höhenrichtung vorgesehen ist, als auch einen Boden (132A, 132B), der in Richtung der Fremdstoffauslassöffnung (131) geneigt ist, aufweist und
wobei die Vorrichtung zum Entfernen von Fremdstoffen (10) an einem Förderweg eines gipshaltigen Rohmaterials vorgesehen ist.

2. Vorrichtung zur Herstellung von Bauplatten auf Gipsbasis nach Anspruch 1, wobei die Fremdstoffsedimentationsvorrichtung (13) eine Fluidität verleihende Vorrichtung (135) enthält, die so konfiguriert ist, dass sie das in die Fremdstoffsedimentationsvorrichtung zugeführte Pulver- und Granulatmaterial fluidisiert.

3. Vorrichtung zur Herstellung von Bauplatten auf Gipsbasis nach Anspruch 1 oder 2,
wobei die Fremdstoffsedimentationsvorrichtung (13) eine Fremdstoffauslassvorrichtung (134) umfasst, die so konfiguriert ist, dass sie die Fremdstoffe austrägt, und
wobei die Fremdstoffauslassvorrichtung (134) an der Fremdstoffauslassöffnung (131) vorgesehen ist.

4. Vorrichtung zur Herstellung von Bauplatten auf Gipsbasis nach Anspruch 3, die ferner eine Fremdstoffabtrennungsvorrichtung (14) umfasst, die so konfiguriert ist, dass sie die Fremdstoffe von dem Pulver- und Granulatmaterial abtrennt, das aus der Fremdstoffauslassöffnung (131) ausgetragen wird und die Fremdstoffe enthält.

5. Vorrichtung zur Herstellung von Bauplatten auf Gipsbasis nach Anspruch 4, die ferner eine Zirkulationsvorrichtung (151) umfasst, die so konfiguriert ist, dass sie das Pulver- und Granulatmaterial, von dem die Fremdstoffe durch die Fremdstoffabtrennungsvorrichtung (14) abgetrennt wurden, wieder auf den Förderweg der Fördervorrichtung (12) zurückführt.

6. Vorrichtung zur Herstellung von Bauplatten auf Gipsbasis nach einem der Ansprüche 1 bis 5, wobei das Pulver- und Granulatmaterial Gips enthält.

7. Vorrichtung zur Herstellung von Bauplatten auf Gipsbasis nach Anspruch 6, wobei der Gips kalzinierten Gips enthält.

## Revendications

1. Appareil de fabrication de panneau de construction à base de plâtre, **caractérisé en ce qu'**il comporte un appareil de retrait de corps étrangers (10) pour retirer des corps étrangers dans un matériau en poudre et granulaire, l'appareil de retrait de corps étrangers (10) comportant :
un dispositif de convoyage (12) configuré pour transporter le matériau en poudre et granulaire d'un orifice d'alimentation (111) à un orifice d'évacuation (112) qui sont destinés au matériau en poudre et granulaire ; et
un dispositif de sédimentation de corps étrangers (13) qui est agencé entre l'orifice d'alimentation (111) et l'orifice d'évacuation (112) sur un trajet de convoyage du dispositif de convoyage (12), et est configuré pour sédimenter les corps étrangers dans le matériau en poudre et granulaire,
dans lequel le dispositif de sédimentation de corps étrangers (13) inclut à la fois un orifice d'évacuation de corps étrangers (131) ménagé sur une position la plus basse dans une direction de hauteur et un fond (132A, 132B) incliné vers l'orifice d'évacuation de corps étrangers (131), et
dans lequel l'appareil de retrait de corps étrangers (10) est agencé sur un trajet de convoyage d'une matière première qui contient du gypse.

2. Appareil de fabrication de panneau de construction à base de plâtre selon la revendication 1, dans lequel le dispositif de sédimentation de corps étrangers (13) inclut un dispositif conférant une fluidité (135) configuré pour fluidifier le matériau en poudre et granulaire fourni dans le dispositif de sédimentation de corps étrangers.

3. Appareil de fabrication de panneau de construction à base de plâtre selon la revendication 1 ou 2,
dans lequel le dispositif de sédimentation de corps étrangers (13) inclut un dispositif d'évacuation de corps étrangers (134) configuré pour évacuer les corps étrangers, et
lequel le dispositif d'évacuation de corps étrangers (134) est agencé au niveau de l'orifice d'évacuation de corps étrangers (131).

4. Appareil de fabrication de panneau de construction à base de plâtre selon la revendication 3, comportant en outre un dispositif de séparation de corps étrangers (14) configuré pour séparer les corps étrangers du matériau en poudre et granulaire qui est évacué de l'orifice d'évacuation de corps étrangers (131) et contient les corps étrangers.

5. Appareil de fabrication de panneau de construction à base de plâtre selon la revendication 4, comportant en outre un dispositif de circulation (151) configuré pour renvoyer le matériau en poudre et granulaire duquel les corps étrangers sont séparés par le dispositif de séparation de corps étrangers (14), dans le trajet de convoyage du dispositif de convoyage (12).

6. Appareil de fabrication de panneau de construction à base de plâtre selon l'une quelconque des revendications 1 à 5, dans lequel le matériau en poudre et granulaire contient du gypse.

7. Appareil de fabrication de panneau de construction à base de plâtre selon la revendication 6, dans lequel le plâtre contient du gypse calciné.
